# EUROPÄISCHE PATENTSCHRIFT

(11) **EP 3 630 533 B1**
(45) Veröffentlichungstag und Bekanntmachung des Hinweises auf die Patenterteilung: **10.04.2024**
(21) Anmeldenummer: 18729090.3
(22) Anmeldetag: 30.05.2018
(51) Int. Cl.: H01R 9/05, H01R 24/28, H01B 9/04, H01R 24/38, H01R 4/46, B60L 53/16, B60L 53/18

(54) **DURCHMESSERREDUZIERTES MEHRLEITERKABEL UND KONTAKTVORRICHTUNG HIERFÜR**
MULTI-CONDUCTOR CABLE OF REDUCED DIAMETER AND CONTACT APPARATUS FOR IT
CÂBLE MULTICONDUCTEUR À DIAMÈTRE RÉDUIT ET DISPOSITIF DE CONTACT ASSOCIÉ

(30) Priorität: 02.06.2017 DE 202017103370 U
(43) Veröffentlichungstag der Anmeldung: 08.04.2020
(73) Patentinhaber: Igus GmbH, 51147 Köln (DE)
(72) Erfinder: HABERING, Richard, 51143 K ln (DE)
(74) Vertreter: Lippert Stachow Patentanwälte Rechtsanwälte
(86) Internationale Anmeldenummer: PCT/EP2018/064312
(87) Internationale Veröffentlichungsnummer: WO 2018/220092

(56) Entgegenhaltungen:
- EP-A1- 2 894 732
- WO-A1-2011/023347
- WO-A1-2013/013713
- US-A- 5 842 873
- US-B1- 6 338 653

## Beschreibung

Die Erfindung betrifft allgemein ein flexibles elektrisches Mehrleiter-Kabel mit einem zentralen Kern sowie einer Anzahl konzentrisch zueinander und ringförmig um den Kern angeordneter Leiter aus Einzeldrähten. Die Erfindung betrifft speziell ein derartiges Mehrleiter-Kabel mit einer Kontaktvorrichtung für einen Steckverbinder.

Eine Leitung mit konzentrisch um einen Kern angeordneten Leitern ist z.B. aus der Offenlegungsschrift DE 40 04 802 A1 bekannt, mit dem Zweck, hohen dynamischen Beanspruchungen standzuhalten.

Im Patent US 3,261,907 wurde ebenfalls, bei einem Mehrleiter-Stromversorgungskabel für hohe Frequenzen vorgeschlagen, die Leiter aus Einzeldrähten konzentrisch zueinander und ringförmig um einen Kern anzuordnen. Neben dem Hauptvorteil, die Impedanz zu verringern, wird dort auch als Vorteil angegeben, dass eine derartige Leitung einen kompakteren Aufbau ermöglicht.

Ferner wird in der FR 2 693 024 A1 für ein Daten- und Stromversorgungskabel mit konzentrischer bzw. koaxialer Anordnung der Leiter eine Durchmesser-Reduzierung von ca. 30% angegeben.

In der Tat erlaubt die konzentrische Bauweise eine spürbare Reduzierung des Gesamtdurchmessers des Kabels im Vergleich zur üblichen Bauweise mit einer Bündelung nebeneinander angeordneter konventioneller Adern mit entsprechendem Leiterquerschnitt.

Eine Reduzierung des Gesamtdurchmessers erleichtert insbesondere die Handhabung. Dies ist nicht nur aber vor allem in manuellen Benutzeranwendungen, wie z.B. bei Ladeleitungen von Ladestationen für Elektrofahrzeuge, ein relevanter Vorteil.

Besonders bedeutsam wird ein kompakter Kabelquerschnitt mit Blick auf den Wunsch kurzer Ladezeiten, d.h. steigender Ladeströme bis hin zu einigen hundert Ampere, welche u.a. aus thermischen Gründen große Leiterquerschnitte der einzelnen Leiter erfordern, insbesondere bei Gleichstrom. Aktuell übliche Ladekabel, z.B. nach IEC 62196 Typ 2, sind i.d.R. für Ladeströme bis 32A geeignet.

Die vorgenannten Patentschriften bieten im Übrigen keinerlei Lösung für das Konfektionieren von Mehrleiter-Kabeln, insbesondere für die Kontaktierung mit elektrischen Anschlussmitteln, wie z.B. Steckverbindern.

Die FR 2 693 024 A1 bestätigt ausdrücklich, dass gattungsgemäße Mehrleiterkabel als Stromversorgungskabel typisch nicht eingesetzt werden, gerade wegen Schwierigkeiten bei den elektrischen Anschlüssen und der Isolierung (vgl. a.a.O. Seite 5, Z. 23-28).

Die WO 2013/013713 A1 hingegen schlägt als Ladekabel für Elektrofahrzeuge ein Koaxialkabel vor, um Störeinflüsse auf die Umwelt zu reduzieren. Das vorgeschlagene Kabel ist ein Mehrleiterkabel mit zentralem Kabelkern und einer Anzahl konzentrisch bzw. koaxial zueinander angeordneter, den Kabelkern umkreisender gegeneinander isolierter Leiter. Allerdings fehlt in WO 2013/013713 A1 jegliche Lehre betreffend eine Lösung zum Kontaktieren der konzentrischen Leiter von Mehrleiterkabeln, insbesondere wir kein geeigneter Ladestecker vorgeschlagen.

Mit der US 2012/094553 A1 aus einem anderen Gebiet wurde für starre Installationssysteme mit koaxialen, starren Leitern eine spezielle Kontaktvorrichtung vorgeschlagen, die jedoch ebenfalls relativ aufwendig in der Montage ist.

Aus dem Gebiet der hochfrequenten Signalkabel sind Vorrichtungen bekannt zum elektrischen Kontaktieren eines mehradrigen Koaxialkabels mit einer Leiterplatte. Eine solche Vorrichtung wird z.B. in WO 2011/023347 A1 vorgeschlagen, mit mehreren radial abgestuften Klemmblöcken, aus einem Klemmbockunterteil und einen Klemmbockoberteil, die in einem Gehäuse aufgenommen sind. Zur elektrischen Verbindung wird zwischen Klemmbock und Ader eine Metallfolie und ein Stützring angeordnet. Jedes Klemmblockunterteil wird jeweils anhand von Einpressfüßen mit der Leiterplatte elektrisch verbunden. Auch diese Bauweise ist recht aufwendig und nicht für Steckverbinder geeignet.

Auch allgemein fehlt dem Stand der Technik bisher eine effektive, kostengünstige Lösung zum Kontaktieren der konzentrischen Leiter von Mehrleiterkabeln.

Eine erste Aufgabe der Erfindung liegt darin, eine verbesserte, vereinfachte Kontaktvorrichtung für durchmesserreduzierte Mehrleiter-Kabel mit konzentrischen Leitern vorzuschlagen. Diese soll insbesondere den Aufwand des Anschließens bzw. der Konfektionierung des Kabels mit Steckverbindern spürbar verringern. Das Kabel mit der Kontaktvorrichtung soll sich zum Verwenden als Ladekabel für Elektrofahrzeuge eignen.

Diese Aufgabe wird gelöst durch ein elektrisches Kabel mit einer Kontaktvorrichtung nach Anspruch 1.

Bei einem elektrischen, vorzugsweise flexiblen Mehrleiterkabel mit einem zentralen Kabelkern, einer Anzahl konzentrisch bzw. koaxial zueinander angeordneter, den Kabelkern umkreisender gegeneinander isolierter Leiter aus Einzeldrähten wird erfindungsgemäß vorgeschlagen, dass die Kontaktvorrichtung Teil eines Steckverbinders, nämlich eines Steckers oder einer Kupplung, insbesondere eines Ladesteckers ist und mindestens oder genau zwei Klemmschalenteile umfasst, die als Formteile aus Kunststoff ausgeführt sind und an ihrer Innenseite mehrere zueinander radial abgestufte Aufnahmen aufweisen, die in Richtung der Kabelachse treppenartig aufeinanderfolgen und z.B. eine trogartige oder muldenförmige Gestaltung haben können. Ferner ist vorgesehen, dass in zumindest einigen Aufnahmen, vorzugsweise in jeder Aufnahme, von zumindest einem Klemmschalenteil jeweils ein separater rinnenförmiger Kontaktkörper angeordnet ist, der einem der konzentrischen Leiter zwecks Kontaktierung zugeordnet ist. Jeder Kontaktkörper hat eine Längserstreckung und einen gekrümmten Querschnittsverlauf, der einen Umfangsanteil des zugeordneten Leiters umgeben soll, um an diesem anzuliegen. In den Aufnahmen des bzw. der Klemmschalenteile können die Kontaktkörper mit ihrer Längserstreckung koaxial zueinander, ebenfalls treppenartig abgestuft gehalten sein.

Als weiteren Aspekt sieht die Erfindung einen Verschluss vor zum Verbinden der Klemmschalenteile miteinander, d.h. welcher in einer Schließstellung die Klemmschalenteile mechanisch fest verbindet. Hierdurch können die Klemmschalenteile in der Schließstellung jeden der vorgesehenen Kontaktkörper zwecks Kontaktierung an den jeweils zugeordneten konzentrischen Leiter anpressen. Weiterhin haben die Kontaktkörper jeweils einen Bereich der einen Kontaktstift oder eine Kontaktbuchse des Steckverbinders bildet.

Mit der vorgeschlagenen Kontaktvorrichtung können konzentrisch aufgebaute Mehrleiterkabel mit besonders wenig Montageaufwand konfektioniert werden. Das Kabel muss dafür nur entsprechend der Abstufung in der Anordnung der Kontaktkörper stufenweise abgesetzt werden, d.h. treppenartig abisoliert werden so, dass in aufeinanderfolgenden Längsabschnitten ein anderer Leiter freigelegt ist. Hierfür stehen geeignete Werkzeuge bzw. Maschinen bereit. Das elektrische Kontaktieren kann im einfachsten Fall dann allein durch passendes Einlegen bzw. Einführen des stufenweise abgesetzten Kabelendes in die offene Stellung der Klemmschalenteile und anschließendes Schließen der Klemmschalenteile erfolgen. Durch die geeignete Dimensionierung und den Verschluss wird eine ausreichende Anpresskraft zwischen den Kontaktkörpern und der zugeordneten Mantelfläche der Rundleiter erzielt. Es ist dabei insbesondere auch keine herkömmliche Schraub- oder Lötkontaktierung erforderlich.

Kurz ausgedrückt, besteht ein Kernaspekt der Erfindung darin, dass zwei Klemmschalen mit einer abgestuften Anordnung von Kontaktmitteln beim Verschließen gleichzeitig auch das Kontaktieren des stufenweise abgesetzten Kabelendes erzielen. Entsprechende weitere Arbeitsschritte entfallen. Es wird u.a. ein schnelles und wegen der vorgegebenen Zuordnung fehlerfreies Kontaktieren gewährleistet. Der spezielle Aufbau der Leitung mit konzentrischen "Rundleitern" ermöglicht dabei eine Reduzierung im Außendurchmesser ca. 20% oder mehr gegenüber einer konventionellen Leitung für den gleichen Strombelag bzw. mit den zugehörigen Leiterquerschnitten. Die bekannten Schwierigkeiten der Konfektionierung solcher Spezialkabel werden durch die Erfindung überwunden.

Unter Rinnenform wird vorliegend auch ein kurzer Längsabschnitt aus einer gedachten Rinne verstanden, d.h. die Abmessung in Längserstreckung kann kleiner sein als in Umfangsrichtung, ähnlich z.B. einer Klemmhülse oder Klemmschelle. Als "Einzeldraht" wird vorliegend ganz allgemein und ungeachtet des Querschnitts jeder leitfähige Draht (Engl. wire, insbesondere im Sinne der IEV ref. 151-12-28) verstanden, u.a. auch ein einzelner Draht in einer Litze oder einem Leiterseil.

Die erforderliche Kraft für die kraftschlüssige Kontaktierung lässt sich über die Dimensionierung der Klemmschalenteile, der Kontaktkörper und oder den Verschluss vorbestimmen oder ggf. auch einstellen. Durch die passende Zuordnung der einzelnen Stufen zueinander kann zudem inhärent eine fehlerfreie Kontaktierung gewährleistet werden, sofern die Lage der Kontaktkörper vorbestimmt wurde. Dies kann ggf. durch einen geeigneten Schutz gegen Vertauschung gewährleistet werden.

In einer Weiterbildung kann dabei der Verschluss als werkzeugfrei schließbarer Schnellverschluss, wie z.B. als Schnellspanner, Hebelspanner, z.B. Kniehebelspanner, Rast-/Clipverbinder oder dgl., ausgeführt sein.

In bevorzugter Ausführungsform ist der Verschluss aus Gründen der elektrischen Sicherheit als nicht lösbarer Schnellverschluss, d.h. nicht zerstörungsfrei lösbare Verbindung ausgeführt. Dies kann z.B. auch mit einem Kniehebelspanner realisiert werden, wenn die Spannhebel passgenau bzw. bündig in eine Aufnahme eintauchen und nachträglich für den Benutzer nicht mehr zugänglich sind.

Auch andere Arten von nicht lösbaren Verbindungen sind denkbar, z.B. eine Nietverbindung oder eine Klebeverbindung, jedoch z.T. mit etwas höherem Montageaufwand verbunden.

Eine kostengünstige Lösung, die hohe Anpresskräfte erlaubt, sieht vor, dass der Verschluss als lösbare Schraubverbindung ausgeführt ist. Dies erlaubt z.B. auch nachträglich Wartungsarbeiten.

Eine flächige elektrische Kontaktierung der Rinnenform an den Kontaktkörpern mit dem jeweils zugeordneten Leiter kann überwiegend und insbesondere bzw. vorzugsweise ausschließlich durch vom Verschluss erzeugte Klemmkraft auf die Umfangsfläche der jeweils zugeordneten Leiter erzielt werden, wobei diese Klemmkraft des Verschlusses vom Klemmschalenteil auf den Kontaktkörper übertragen werden kann. Vorzugsweise werden dabei durch vorbestimmte Dimensionierung alle zugeordneten Kontaktkörper mit im Wesentlichen gleicher Vorspannung auf die jeweilige Mantelfläche des abgestuft freigelegten Leiterabschnitts angepresst. Somit kann die elektrische Kontaktierung flächig und kraftschlüssig ohne weitere Arbeitsschritte erfolgen.

Insbesondere, wenn in jedem von zwei Klemmschalenteilen Kontaktkörper aufgenommen sind, ist es zur hinreichenden Kontaktierung vorteilhaft, wenn die Rinnenform der Kontaktkörper sich über einen Umfangsanteil von mindestens 20% bis maximal 80% des Umfangs, insbesondere einen Umfangswinkel von mindestens 120° bis maximal 270°, des zugeordneten konzentrischen Leiters erstreckt.

Es ist alternativ auch möglich, eine Rinnenform in Art von Klemmhülsen auszuführen, d.h. vorzusehen, dass die Rinnenform der Kontaktkörper sich über einen Umfangsanteil von mehr als 60% bis hin zu 95% oder mehr des Umfangs des zugeordneten konzentrischen Leiters erstreckt. Dabei können zwei gegenüberliegende Aufnahmen der Klemmschalenteile jeweils einen solchen Kontaktkörper aufnehmen und anpressen, z.B. indem der freie Querschnitt der Aufnahmen ein Untermaß gegenüber zumindest der Klemmhülse und ggf. des zugeordneten Leiters aufweist.

Es können also getrennt in jeder Klemmschale Kontaktkörper vorliegen, oder gemeinsame Kontaktkörper für jede Radialstufe, welche durch Zusammenwirken der Klemmschalen auf den jeweiligen "Rundleiter" gepresst werden, ähnlich Klemmhülsen. Letztere Gestaltung vereinfacht weitergehend die Konfektionierung, z.B. wenn die Kontaktkörper Kontaktstifte oder -Buchsen umfassen, wie weiter unten beschrieben.

In einfach herzustellender Bauweise haben die Kontaktkörper zumindest teilweise eine Rinnenform mit bogenförmig gekrümmtem Querschnitt, insbesondere mit kreisbogenförmig gekrümmtem Querschnitt.

Es ist auch möglich, einen unstetig gekrümmten Querschnitt vorzusehen, etwa einen gewellten oder verzahnten Verlauf der Krümmung um den zugeordneten Leiter. Durch diese aufwendigere Formgebung kann die insgesamt vorhandene Kontaktfläche vergrößert werden und z.B. auch ein "Verhaken" mit den Einzeldrähten der Leiter z.B. zur Längsarretierung bewirkt werden.

Kostengünstig sind Kontaktkörper, die einteilig hergestellt sind, etwa als umgeformte Blechteile z.B. aus Kupferblech, wobei die umzuformende Grundform durch Stanzen hergestellt sein kann. Alternativ sind auch spanend hergestellte Kontaktkörper möglich, z.B. Kupferfrästeile.

Die erfindungsgemäße Lösung ist besonders effektiv und zeitsparend, weil die Kontaktkörper in einem ersten Bereich die Rinnenform aufweisen und in einem gegenüberliegenden zweiten Bereich Kontaktstifte oder Kontaktbuchsen für einen Steckverbinder umfassen. Wenn diese Art Kontaktkörper in zumindest einem Klemmschalenteil vorliegt, wird die Konfektionierung des Spezialkabels mit einem Steckverbinder erheblich erleichtert, da die Kontaktierung selbst bereits inhärent den Steckverbinder bereit- oder herstellen kann.

In einer Weiterbildung ist vorgesehen, dass die Klemmschalenteile der Kontaktvorrichtung selbst, ggf. mit weiteren Gehäuseteilen, Bestandteile eines mehrteiligen Steckverbinder-Gehäuses bilden. Vorzugsweise kann das für die Anwendung gewünschte Steckverbindergehäuse auch im Wesentlichen aus den Klemmschalenteilen bestehen, so dass weitere Arbeitsschritte zur Steckverbindermontage entfallen. Der Steckverbinder kann z.B. ein Starkstrom-Stecker oder eine Starkstrom-Muffe, wie etwa nach IEC 62196 Typ 2 oder dgl. sein.

Bei einer Kombination der beiden vorstehenden Weiterbildungen ist erfindungsgemäß vorgesehen, dass die Klemmschalenteile in einem ersten Bereich die Aufnahmen aufweisen und in einem gegenüberliegenden zweiten Bereich Gehäuseteile eines Steckers oder einer Kupplung bilden. Dabei können die Klemmschalenteile insbesondere im zweiten Bereich jeweils mindestens einen endseitigen Kontaktträger für einen Kontaktstift oder eine Kontaktbuchse umfassen. So kann das Kontaktieren des konzentrischen Leiters in einem Arbeitsschritt zugleich die Steckermontage erzielen.

Für bestimmte Schutzklassen ist es zweckmäßig, wenn die Klemmschalenteile mindestens eine Dichtung an ihrer Schnittstelle aufweisen, z.B. um das Steckverbindergehäuse spritzwasserdicht zu gestalten. So kann eine hohe IP-Schutzklasse z.B. IP67 erzielt werden. Ferner können die Klemmschalenteile auch eine Zugentlastung am kabelseitigen Ende des ersten Bereichs aufweisen, so dass mit dem Verschluss zugleich auch die Zugentlastung und ggf. auch eine Abdichtung am Außenmantel erzielt werden.

Eine weitere Vereinfachung wird erzielt, wenn die Kontaktvorrichtung genau zwei Klemmschalenteile, insbesondere Formteile aus Kunststoff z.B. Spritzgussteile, aufweist, die als Halbschalen hergestellt sind. Diese können dabei auch als Gleichteile hergestellt sein. Mit wenigen Typen von Klemmschalenteilen können so unterschiedlichste Spezialkabel kontaktiert und ggf. konfektioniert werden, wobei nicht in jeder Aufnahmestufe zwingend ein Kontaktköper vorgesehen werden muss. Daher ist in jedem Klemmschalenteil mindestens eine Anzahl Aufnahmen entsprechend der Anzahl konzentrischer Leiter vorgesehen, bzw. es können zumindest einige Aufnahmen jedes Klemmschalenteils jeweils die Rinnenform eines Kontaktkörpers und den davon umrandeten Umfangsanteil des zugeordneten Leiters aufnehmen.

Der Kabelkern kann rein als mechanisches Widerlager ausgeführt sein, umfasst aber vorzugsweise selbst einen weiteren Leiter aus Einzeldrähten zwecks räumlicher Optimierung. Es kann optional zu jeder Isolierung zwischen einem Paar angrenzender konzentrischer Leiter eine Stützschicht vorgesehen sein, welche ein Eindrücken von Einzeldrähten in die Isolierung verhindert. Dies ist insbesondere bei hohen Anpresskräften angebracht.

Zur Durchmesseroptimierung ist es weiterhin vorteilhaft, wenn der Querschnitt der Einzeldrähte von einem konzentrischen Leiter zum nächsten konzentrischen Leiter nach außen abnimmt. So kann z.B. der Drahtquerschnitt entsprechend dem Verhältnis der Radien von einem Leiter zum nächsten reduziert werden, da der Verteilungsumfang für die Einzeldrähte zunimmt. So kann, je nach nominalem Strombelag wahlweise der Leiterquerschnitt durch geeignete Auswahl der Einzeldrähte angepasst werden, um den Gesamtdurchmesser weiter zu verringern. Vorteilhaft wird z.B. der Schutzleiter radial Außen angeordnet, da dieser nach Norm einen geringeren Querschnitt haben kann als die stromführenden Leiter.

Die erfindungsgemäße Leitungs- und Kontaktierungs-Bauweise zeigt sich als besonders vorteilhaft, wenn drei oder mehr konzentrische Leiter um den Kabelkern angeordnet sind, und dabei zwei oder mehr Leiter mit sehr großem Querschnitt, etwa jeweils einem Gesamt-Ringquerschnitt von mindestens 20mm², insbesondere über 60mm², als Stromversorgungsleiter dienen. Für Gleichstrom bis 500A sind z.B. Leiterquerschnitte >90mm² erforderlich. Die Erfindung bietet auch erhebliche Vorteile bei Mehrzweck-Leitungen, wenn neben den Stromversorgungsleitern auch mindestens ein Signalleiter zur Datenübertragung mit deutlich geringerem Gesamtquerschnitt vorgesehen ist.

Die Herstellung des Spezialkabels kann in an sich bekannter Weise erfolgen. Mechanisch vorteilhaft ist, wenn jeder Leiter aus verseilten Einzeldrähten besteht, und diese vorzugsweise mit abwechselnd gegenläufiger Schlagrichtung von einem Leiter zum nächsten verseilt sind. Wie in DE 40 04 802 A1 beschrieben, können die Leiter z.B. auf die jeweils zwischenliegende Isolierung verseilt werden.

Die Erfindung betrifft auch die Kontaktvorrichtung als solche, insbesondere für einen Steckverbinder, mit den Merkmalen aus einer der vorstehenden Ausführungsformen.

Eine mögliche Anwendung der Erfindung findet sich im Bereich der Ladestationen für Elektrofahrzeuge, wo wegen dem Wunsch höherer Ladeströme und der erforderlichen Handhabbarkeit durch die Endnutzer besondere Vorteile erzielt werden. Auch in anderen Anwendungen mit hohen Stromstärken bietet die Erfindung Vorteile.

Die Erfindung kann jedoch grundsätzlich auf alle Arten elektrischer Mehrleiter-Kabel, einschließlich reiner Datenleitungen, angewendet werden, da eine Durchmesserreduzierung bei gleichzeitiger Verringerung des Montageaufwands in vielen Bereichen wünschenswert ist.

Weitere vorteilhafte Merkmale und Wirkungen der Erfindung werden im Folgenden anhand eines Ausführungsbeispiels unter Bezugnahme auf die beigefügten Zeichnungen näher erläutert. Es zeigen:
**FIG.1A-1B****:** rein beispielhaft einen Querschnitt durch ein konventionelles Mehrleiter-Kabel (FIG.1B) sowie einen Mehrleiter-Kabel im Sinne der Erfindung (FIG.1A);
**FIG.2A-2C****:** schematische Ansichten eines Ausführungsbeispiels einer Kontaktvorrichtung für ein Mehrleiter-Kabel gemäß FIG.1A; und
**FIG.3A-3B****:** eine schematische Ansichten von mehreren Kontaktkörpern für eine erfindungsgemäße Kontaktvorrichtung in Seitenansicht (FIG.3A) und Frontansicht (FIG.3B); und
**FIG.4****:** eine schematische Frontansicht eines weiteren Kontaktkörpers.

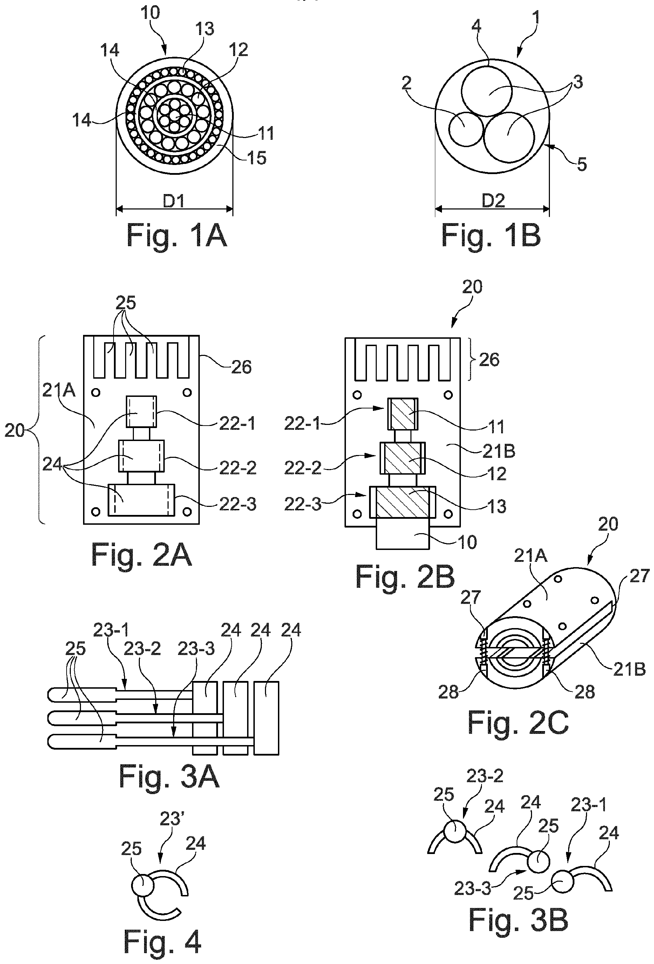

In FIG.1B ist ein herkömmliches Mehrleiter-Kabel 1 gezeigt, mit drei Adern 2, 3, d.h. Leitern aus Einzeldrähten mit einer jeweiligen Isolierung 4. Diese sind in einem Außenmantel 5 parallel nebeneinander geführt. Je nach benötigtem Leiterquerschnitt der Litzen 2, 3 ergibt sich ein bestimmter Gesamtdurchmesser D2.

Demgegenüber bietet die konzentrische erfindungsgemäße Kabelbauweise nach FIG.1A eine spürbare Reduzierung des Gesamtdurchmessers D1 bei gleichbleibendem Leiterquerschnitt. FIG.1A zeigt ein Mehrleiter-Kabel 10 mit einem ersten inneren Leiter 11 aus Einzeldrähten als Kern, einem konzentrisch auf der Isolierung 14 des inneren Leiters 11 aufgebrachten zweiten Leiter 12, mit im Wesentlichen identischen Leiterquerschnitt wie der Leiter 11. Ferner ist als Schutzleiter auf die Isolierung 14 des zweiten Leiters 12 ein dritter konzentrischer Leiter 13 ebenfalls ringförmig um die Mittelachse (senkrecht zu FIG.1B) des Kabels 10 angeordnet, dessen Leiterquerschnitt geringer sein kann. Im Vergleich zum Gesamtdurchmesser D2der konventionellen Leitung in FIG.1B hat die Leitung in einen um etwa 20% bis 25% reduzierten Gesamtdurchmesser D1, gemessen am Außenmantel 15. Dies erhöht u.a. die Flexibilität und somit Handhabbarkeit des Kabels 10. Analog können natürlich auch Kabel mit mehr als drei Leitern aufgebaut werden (nicht gezeigt).

FIG.2A-2C zeigen rein beispielhaft eine erfindungsgemäße Kontaktier-Vorrichtung 20 zum vereinfachten Konfektionieren eines Spezialkabels 10 gemäß FIG.1A.

Die Kontaktvorrichtung 20 hat hier zwei Klemmschalenteile 21A, 21B in Form von Halbschalen mit im Wesentlichen identischen Aufbau, z.B. als Kunststoff-Gleichteile im Spritzguss. Die Klemmschalenteile 21A, 21B haben an der Innenseite mehrere zueinander radial abgestufte Aufnahmen 22-1, 22-2, 22-3, hier etwa trogartig zylindrisch. Der Radius der Aufnahmen 22-1, 22-2, 22-3 nimmt vom kabelseitigen Stirnende nach innen hin stufenweise ab, entsprechend einer abgestuften Abmantelung der einzelnen Leiter 11, 12, 13 des Spezialkabels 10. In FIG.2A-2C ist in jeder Aufnahme 22-1, 22-2, 22-3 ein entsprechender Kontaktkörper 23-1, 23-2, 23-3 aufgenommen, und jeweils einem der konzentrischen Leiter 11, 12, 13 zwecks Kontaktierung mit dem Steckverbinder (s. unten) zugeordnet.

Beispielhafte Kontaktkörper 23-1, 23-2, 23-3 sind in FIG.3-4 gezeigt. Jeder Kontaktkörper 23-1, 23-2, 23-3 hat in einem ersten Bereich im Wesentlichen eine Rinnenform 24 mit einer Längserstreckung (in der Ebene der FIG.3A) und gekrümmtem Querschnittsverlauf (FIG.3B/FIG.4) entlang eines zu kontaktierenden Umfangsanteils des zugeordneten Leiters 11, 12, 13. In FIG.3B erstreckt sich die Rinnenform 24 über einen Umfangswinkel von ca. 180°, sodass in beiden Klemmschalenteilen 21A, 21B wahlweise ein oder zwei Kontaktkörper 23-1, 23-2, 23-3 vorgesehen werden können. In einem gegenüberliegenden zweiten Bereich sind integral mit dem Kontaktkörper 23-1, 23-2, 23-3 und über einen Steg mit der Rinnenform 24 verbundene Kontaktstifte 25 hergestellt (oder auch Kontaktbuchsen) . Die Kontaktstifte 25 sind für einen Steckverbinder 26 (FIG.2A-2B) vorgesehen. In der Bauweise nach FIG.3B wird, je nach Leiter 11, 12, 13 und Lage des Kontaktstifts 25, im fertigen Steckverbinder 26 der passende Kontaktkörper 23-1, 23-2, 23-3 gewählt bzw. hergestellt. In der Ausführungsvariante nach FIG.4 ist ein Kontaktkörper 23' gezeigt, dessen Rinnenform 24 im ersten Bereich sich über ca. 320-340° Umfangswinkel erstreckt, so dass in jeder Aufnahme 22-1, 22-2, 22-3 auch jeweils nur ein Kontaktkörper 23' vorgesehen werden kann. Hier kann die Position des Kontaktstifts 25 durch Drehen um die Hauptachse des Kabels 10 bzw. Steckverbinders 26 in der Aufnahme 22-1, 22-2, 22-3 eingestellt werden, so dass ggf. nicht für jeden Leiter 11, 12, 13 ein separater Kontaktkörper nötig ist. Die Rinnenform 24 kann einen kreisbogenförmig gekrümmten Querschnitt (FIG.3B/FIG.4) zeigen, oder auch einen unstetig gekrümmten Verlauf, etwa mit Verzahnung, sofern eine kraftschlüssig großflächige Kontaktierung mit der äußeren Mantelfläche des jeweiligen Leiters 11, 12, 13 gewährleistet ist.

Wie am besten aus FIG.2A-2C ersichtlich, bilden die beiden Klemmschalenteile 21A, 21B zugleich ein Steckverbindergehäuse mit geeignet ausgebildeten Kontaktträgern für die Kontaktstifte 25. Diese liegen im Bereich eines Steckers 26 welcher den Aufnahmen 22-1, 22-2, 22-3, bzw. der Durchführung des Spezialkabels 10 gegenüberliegt. Alternativ zur Gestaltung als Stecker 26, ist vollkommen analog auch eine Buchse möglich, wobei die Klemmschalenteile 21A, 21B beliebige Steckverbinder realisieren können. Die Klemmschalenteile 21A, 21B können somit Gehäuseteile eines Steckverbinders 26 sein.

Als möglicher Verschluss zum festen Verbinden der Klemmschalenteile 21A, 21B, z.B. zu einem geschlossenen Gehäuse, und zugleich auch zum Erzeugen einer elektrisch hinreichend kontaktierenden Anpresskraft der Kontaktkörper 23-1, 23-2, 23-3 bzw. 23` auf die jeweils freigelegten äußeren Fläche des zugeordneten Leiters 11, 12, 13 ist in FIG.2C rein beispielhaft ein Schraubverschluss gezeigt, mit vier eckseitig angeordneten Spannschrauben 27 und Muttern 28. Alternativ kann z.B. ähnlich einer Klemmschelle, an einer Längsseite der Klemmschalenteile 21A, 21B ein Scharnier vorgesehen sein und an der gegenüberliegenden Seite eine Spannhebel-Vorrichtung zum schnelleren und sicheren verschließen der Klemmschalenteile 21A, 21B. Nicht näher gezeigt sind weitere Merkmale, wie beispielsweise eine integrierte Zugentlastung am stirnseitigen ein für Ende für das Spezialkabel 10, Dichtungen für besondere IP-Schutzklassen, die Durchführung und Arretierung der Kontaktstifte 25 usw.

Durch den Verschluss 27, 28 wird beim Verbinden der Klemmschalenteile 21A, 21B in eine Schließstellung (nicht vollständig geschlossen in FIG.2c) jeder Kontaktkörper 23-1, 23-2, 23-3 bzw. 23' zwecks Kontaktierung an den jeweils zugeordneten konzentrischen Leiter angepresst 11, 12, 13. Durch die integrale Bauweise wird zugleich auch der Steckverbinder 26 mit den Kontaktstiften 25 hergestellt, so dass eine erhebliche Reduzierung beim Konfektionierungsaufwand erzielt wird und das Spezialkabel 10 sicher kontaktiert ist.

### Bezugszeichenliste

FIG.1A-1B
   1 herkömmliches Mehrleiter-Kabel
   2, 3 Adern
   4 Isolierung
   5 Außenmantel
   10 konzentrisches Spezialkabel
   11, 12, 13 ringförmige Leiter
   14 Isolierung
   15 Außenmantel
   D1, D2 Gesamtdurchmesser
FIG.2A-2C und FIG.3-4
   20 Kontaktvorrichtung
   21A, 21B Klemmschalenteile
   22-1, 22-2, 22-3 Aufnahmen
   23-1, 23-2, 23-3 Kontaktkörper
   24 Rinnenform
   25 Kontaktstift
   26 Steckverbinder
   27, 28 Verschluss (Spannschrauben)

## Patentansprüche

1. Elektrisches Mehrleiter-Kabel (10) mit Kontaktvorrichtung für einen Steckverbinder, zum Verwenden als Ladekabel für Elektrofahrzeuge, umfassend:
einen zentralen Kabelkern (11), eine Anzahl konzentrisch zueinander ringförmig um den Kabelkern angeordneter Leiter (12; 13) aus Einzeldrähten, und jeweils eine Isolierung (14) zwischen den Leitern; wobei
- die Kontaktvorrichtung einen Steckverbinder (26), nämlich einen Stecker oder einer Kupplung umfasst;
- die Kontaktvorrichtung (20) zwei Klemmschalenteile (21A, 21B) umfasst, die als Formteile aus Kunststoff ausgeführt sind und an ihrer Innenseite mehrere voneinander radial abgestufte Aufnahmen (22-1, 22-2, 22-3) aufweisen;
- die Klemmschalenteile (21A, 21B) in einem ersten Bereich die Aufnahmen (22-1, 22-2, 22-3) aufweisen und in einem gegenüberliegenden zweiten Bereich Gehäuseteile des Steckverbinders (26), nämlich des Steckers oder der Kupplung, bilden;
- in den Aufnahmen (22-1, 22-2, 22-3) zumindest eines Klemmschalenteils jeweils ein Kontaktkörper (23-1, 23-2, 23-3) angeordnet ist, der einem der konzentrischen Leiter (12; 13) zwecks Kontaktierung zugeordnet ist; wobei jeder Kontaktkörper in einem ersten Bereich eine Rinnenform (24) mit Längserstreckung und gekrümmtem Querschnittsverlauf um einen Umfangsanteil des zugeordneten Leiters (12; 13) aufweist;
- ein Verschluss (27, 28) zum Verbinden der Klemmschalenteile (21A, 21B) vorgesehen ist, welcher in einer Schließstellung die Klemmschalenteile aneinander befestigt;
- die Klemmschalenteile (21A, 21B) in der Schließstellung die Kontaktkörper koaxial zueinander halten und jeden Kontaktkörper zwecks Kontaktierung an den jeweils zugeordneten konzentrischen Leiter anpressen; und
- die Kontaktkörper (23-1, 23-2, 23-3) in einem zweiten Bereich, welcher dem ersten Bereich mit der Rinnenform (24) gegenüberliegt, Kontaktstifte (25) oder Kontaktbuchsen des Steckverbinders (26) umfassen;
wobei die Kontaktkörper (23-1, 23-2, 23-3) jeweils einteilig hergestellt sind.

2. Kabel nach Anspruch 1, **dadurch gekennzeichnet, dass** der Verschluss (27, 28) als:
- werkzeugfrei schließbarer Schnellverschluss, wie z.B. als Schnellspanner, Clipverbindung oder dgl., ausgeführt ist, insbesondere als nicht lösbarer Schnellverschluss;
- als nicht lösbare Nietverbindung; oder
- als lösbare Schraubverbindung ausgeführt ist.

3. Kabel nach Anspruch 1 oder 2, **dadurch gekennzeichnet, dass** eine flächige elektrische Kontaktierung der Rinnenform (24) der Kontaktkörper (23-1, 23-2, 23-3) mit dem jeweils zugeordneten Leiter (11, 12, 13) überwiegend und insbesondere ausschließlich durch vom Verschluss erzeugte und vom Klemmschalenteil auf den Kontaktkörper übertragene Klemmkraft auf die Umfangsfläche der jeweils zugeordneten Leiter erzielt wird; wobei vorzugsweise
- die Rinnenform (24) der Kontaktkörper sich über einen Umfangsanteil von mindestens 20% bis maximal 80% des Umfangs, insbesondere einen Umfangswinkel von mindestens 120° bis maximal 270°, des zugeordneten konzentrischen Leiters erstreckt; oder
- die Rinnenform (24) der Kontaktkörper sich über einen Umfangsanteil von ca. 60% bis 95% des Umfangs des zugeordneten konzentrischen Leiters erstreckt, und zwei gegenüberliegende Aufnahmen der Klemmschalenteile jeweils einen solchen Kontaktkörper aufnehmen und anpressen.

4. Kabel nach Anspruch 3, **dadurch gekennzeichnet, dass** die Rinnenform (24) der Kontaktkörper einen bogenförmig gekrümmten Querschnitt, insbesondere einen kreisbogenförmig gekrümmten Querschnitt; oder einen unstetig gekrümmten Querschnitt aufweist.

5. Kabel nach einem der Ansprüche 1 bis 4, **dadurch gekennzeichnet, dass** die Klemmschalenteile (21A, 21B) der Kontaktvorrichtung Bestandteile eines mehrteiligen Steckverbinder-Gehäuses bilden, wobei das Steckverbindergehäuse vorzugsweise aus den Klemmschalenteilen (21A, 21B) besteht; wobei die Klemmschalenteile (21A, 21B) vorzugsweise im zweiten Bereich jeweils mindestens einen endseitigen Kontaktträger für einen Kontaktstift (25) oder eine Kontaktbuchse umfassen.

6. Kabel nach Anspruch 5, **dadurch gekennzeichnet, dass** die Klemmschalenteile (21A, 21B) mindestens eine Dichtung an ihrer Schnittstelle und oder eine Zugentlastung am kabelseitigen Ende des ersten Bereichs aufweisen.

7. Kabel nach einem der Ansprüche 1 bis 6, **dadurch gekennzeichnet, dass** die Kontaktvorrichtung (20) genau zwei Klemmschalenteile (21A, 21B) aufweist, die als Halbschalen, insbesondere als Gleichteile hergestellt sind.

8. Kabel nach einem der Ansprüche 1 bis 7, **dadurch gekennzeichnet, dass** mindestens eine Anzahl Aufnahmen (22-1, 22-2, 22-3) entsprechend der Anzahl konzentrischer Leiter in jedem Klemmschalenteil (21A, 21B) vorgesehen ist und zumindest einige Aufnahmen jedes Klemmschalenteils jeweils die Rinnenform (24) eines Kontaktkörpers und den davon umrandeten Umfangsanteil des zugeordneten Leiters aufnehmen.

9. Kabel nach einem der Ansprüche 1 bis 8 , **dadurch gekennzeichnet, dass**
- der Kabelkern (11) einen weiteren Leiter aus Einzeldrähten umfasst;
- zu jeder Isolierung (14) zwischen einem Paar angrenzender konzentrischer Leiter eine Stützschicht vorgesehen ist, welche ein Eindrücken von Einzeldrähten in die Isolierung verhindert; und/oder
- der Querschnitt der Einzeldrähte von einem konzentrischen Leiter (11; 12) zum nächsten (12; 13) konzentrischen Leiter nach außen abnimmt.

10. Kabel nach einem der Ansprüche 1 bis 9, **dadurch**
**gekennzeichnet, dass** jeder Leiter (11, 12, 13) aus verseilten Einzeldrähten besteht, vorzugsweise mit abwechselnd gegenläufiger Schlagrichtung von einem Leiter zum nächsten, und insbesondere auf die zwischenliegende Isolierung verseilt.

11. Kabel nach einem der Ansprüche 1 bis 10, **dadurch**
**gekennzeichnet, dass** mindestens drei konzentrische Leiter (11, 12, 13) um den Kabelkern angeordnet sind, wobei zwei Leiter mit jeweils einem Gesamt-Ringquerschnitt von mindestens 20mm², insbesondere über 60mm², als Stromversorgungsleiter dienen.

12. Kabel nach einem der Ansprüche 1 bis 11, **dadurch**
**gekennzeichnet, dass** mindestens ein Signalleiter zur Datenübertragung mit im Vergleich zu den Stromversorgungsleitern deutlich geringerem Gesamtquerschnitt vorgesehen ist.

13. Ladestation für Elektrofahrzeuge umfassend ein Kabel nach einem der Ansprüche 1 bis 12.

14. Verwendung eines Kabels (10) nach einem der Ansprüche 1 bis 12 als Ladekabel für Elektrofahrzeuge.

## Claims

1. An electrical multi-conductor cable (10) with contact apparatus for a plug-in connector, for use as a charging cable for electric vehicles, including:
a central cable core (11), a number of conductors (12; 12) which are arranged concentrically relative to each other in an annular shape around the cable core and comprising individual wires, and a respective insulation (14) between the conductors, wherein
- the contact apparatus comprises a plug-in connector (26), namely a plug or a socket;
- the contact apparatus (20) includes two clamping shell portions (21A, 21B), which are implemented as formed parts made of plastics and at their inside have a plurality of receiving means (22-1, 22-2, 22-3) which are stepped radially from each other,
- in a first region the clamping shell portions (21A, 21B) have the receiving means (22-1, 22-2, 22-3) and in an opposite second region form housing portions of the plug-in connector (26), namely of a plug or a coupling;
- arranged in the receiving means (22-1, 22-2, 22-3) of at least one clamping shell portion is a respective contact body (23-1, 23-2, 23-3) associated with one of the concentric conductors (12; 13) for contacting purposes, wherein each contact body in a first region has a channel shape (24) with a longitudinal extent and of a curved cross-sectional configuration around a peripheral portion of the associated conductor (12; 13);
- there is provided a closure (27, 28) for connecting the clamping shell portions (21A, 21B), which fixes the clamping shell portions to each other in a closed position;
- the clamping shell portions (21A, 21B) in the closed position hold the contact bodies in coaxial relationship with each other and press each contact body for contacting purposes against the respectively associated concentric conductor; and
- the contact bodies (23-1, 23-2, 23-3) in a second region, which lies opposite the first region with the channel shape (24), include contact pins (25) or contact sockets of the plug-in connector (26);
wherein the contact bodies (23-1, 23-2, 23-3) are respectively produced in one piece.

2. A cable according to claim 1 **characterised in that** the closure (27, 28) is in the form of:
- a quick-action closure which is closable without a tool, like for example a quick release arrangement, a clip connection or the like, in particular in the form of a non-releasable quick-action closure,
- a non-releasable rivet connection, or
- a releasable screw connection.

3. A cable according to claim 1 or claim 2 **characterised in that** surface electrical contacting of the channel shape (24) of the contact bodies (23-1, 23-2, 23-3) with the respectively associated conductor (11, 12, 13) is achieved predominantly and in particular exclusively by clamping force produced by the closure and transmitted by the clamping shell portion on to the contact body, on to the peripheral surface of the respectively associated conductor; wherein preferably
- the channel shape (24) of the contact bodies extends over a peripheral portion of at least 20% to a maximum of 80% of the periphery, in particular a peripheral angle of at least 120° to a maximum of 270°, of the associated concentric conductor; or
- the channel shape (24) of the contact bodies extends over a peripheral portion of about 60% to 95% of the periphery of the associated concentric conductor and two oppositely disposed receiving means of the clamping shell portions respectively receive and press such a contact body.

4. A cable according to claim 3 **characterised in that** the channel shape (24) of the contact bodies is of an arcuately curved cross-section, in particular a cross-section curved in the shape of a circular arc, or an irregularly curved cross-section.

5. A cable according to one of claims 1 to 4, **characterised in that** the clamping shell portions (21A, 21B) of the contact apparatus form component parts of a multi-part plug connector housing, the plug connector housing preferably consisting of the clamping shell portions (21A, 21B); wherein the clamping shell portions (21A, 21B) preferably in the second region respectively include at least one end contact carrier for a contact pin (25) or a contact socket.

6. A cable according to claim 5 **characterised in that** the clamping shell portions (21A, 21B) have at least one seal at their interface and/or a strain relief means at the cable end of the first region.

7. A cable according to one of claims 1 to 6, **characterised in that** the contact apparatus (20) has precisely two clamping shell portions (21A, 21B), which are produced in the form of half-shells, in particular as identical parts.

8. A cable according to one of claims 1 to 7 **characterised in that** there is provided at least a number of receiving means (22-1, 22-2. 22-3) corresponding to the number of concentric conductors in each clamping shell portion (21A, 21B) and at least some receiving means of each clamping shell portion respectively receive the channel shape (24) of a contact body and the peripheral portion, surrounded thereby, of the associated conductor.

9. A cable according to one of claims 1 to 8 **characterised in that**
- the cable core (11) includes a further conductor comprising individual wires;
- for each insulation (14) between a pair of adjoining concentric conductors there is provided a support layer which prevents individual wires from being pressed into the insulation;
and/or
- the cross-section of the individual wires decreases outwardly from one concentric conductor (11; 12) to the next concentric conductor (12; 13).

10. A cable according to one of claims 1 to 9 **characterised in that** each conductor (11, 12, 13) comprises braided individual wires, preferably with an alternately opposite winding direction from one conductor to the next, and in particular braided on to the interposed insulation.

11. A cable according to one of claims 1 to 10 **characterised in that** at least three concentric conductors (11, 12, 13) are arranged around the cable core, wherein two conductors of a respective overall annular cross-section of at least 20 mm², in particular over 60 mm², serve as a power supply conductor.

12. A cable according to one of claims 1 to 11, **characterised in that** there is provided at least one signal conductor for data transmission of markedly smaller overall cross-section.

13. A charging station for electric vehicles including a cable according to one of claims 1 to 12.

14. Use of a cable (10) according to one of claims 1 to 12 as a charging cable for electric vehicles.

## Revendications

1. Câble électrique multiconducteur (10) avec dispositif de contact pour un connecteur, destiné à être utilisé comme câble de charge pour véhicules électriques, comprenant:
une âme de câble centrale (11), un certain nombre de conducteurs (12; 13) de fils individuels disposés concentriquement les uns par rapport aux autres en forme d'anneau autour de l'âme de câble et respectivement une isolation entre les conducteurs; où
- le dispositif de contact comprend un connecteur (26), à savoir une fiche ou un raccord;
- le dispositif de contact (20) comprend deux parties de coque de serrage (21A, 21B) qui sont réalisées sous forme de pièces moulées en matière plastique et qui présentent sur leur face intérieure plusieurs logements (22-1, 22-2, 22-3) étagés radialement les uns par rapport aux autres;
- les parties de coque de serrage (21A, 21B) présentent dans une première zone les logements (22-1, 22-2, 22-3) et forment dans une deuxième zone opposée des parties de boîtier du connecteur (26), à savoir de la fiche ou du raccord;
- dans les logements (22-1, 22-2, 22-3) d'au moins une partie de coque de serrage est disposé respectivement un corps de contact (23-1, 23-2, 23-3) qui est associé à l'un des conducteurs concentriques (12; 13) en vue d'une mise en contact; chaque corps de contact présentant dans une première zone une forme de gouttière (24) avec une extension longitudinale et un tracé de section transversale incurvé autour d'une partie périphérique du conducteur associé (12; 13);
- il est prévu une fermeture (27, 28) pour relier les parties de coque de serrage (21A, 21B), qui fixe les parties de coque de serrage l'une à l'autre dans une position de fermeture;
- les parties de coque de serrage (21A, 21B) maintiennent les corps de contact de manière coaxiale l'un par rapport à l'autre dans la position de fermeture et pressent chaque corps de contact contre le conducteur concentrique respectivement associé en vue d'établir le contact; et
- les corps de contact (23-1, 23-2, 23-3) comprennent dans une deuxième zone, qui est opposée à la première zone présentant la forme de gouttière (24), des broches de contact (25) ou des douilles de contact du connecteur (26),
les corps de contact (23-1, 23-2, 23-3) étant chacun fabriqués d'une seule pièce.

2. Câble selon la revendication 1, **caractérisé en ce que** la fermeture (27, 28) se présente sous la forme d'un:
- fermeture rapide pouvant être fermée sans outil, comme par exemple un serrage rapide, un assemblage par clip ou similaire, en particulier une fermeture rapide non détachable;
- assemblage riveté non détachable; ou
- assemblage à vis détachable.

3. Câble selon la revendication 1 ou 2, **caractérisé en ce qu'**un contact électrique de surface de la forme de gouttière (24) des corps de contact (23-1, 23-2, 23-3) avec le conducteur (11, 12, 13) respectivement associé est obtenu principalement et en particulier exclusivement par la force de serrage produite par la fermeture et transmise par la partie de coque de serrage au corps de contact sur la surface périphérique des conducteurs respectivement associés; de préférence
- la forme de gouttière (24) du corps de contact s'étend sur une partie périphérique d'au moins 20% à au maximum 80% de la périphérie, en particulier sur un angle périphérique d'au moins 120° à au maximum 270°, du conducteur concentrique associé; ou
- la forme de gouttière (24) des corps de contact s'étend sur une partie périphérique d'environ 60% à 95% de la périphérie du conducteur concentrique associé, et deux logements opposés des parties de coque de serrage reçoivent chacun un tel corps de contact et le serrent.

4. Câble selon la revendication 3, **caractérisé en ce que** la forme de gouttière (24) des corps de contact présente une section transversale incurvée en forme d'arc, en particulier une section transversale incurvée en forme d'arc de cercle; ou une section transversale incurvée de manière discontinue.

5. Câble selon l'une des revendications 1 à 4, **caractérisé en ce que** les parties de coque de serrage (21A, 21B) du dispositif de contact forment des éléments constitutifs d'un boîtier de connecteur en plusieurs parties, le boîtier de connecteur se composant de préférence des parties de coque de serrage (21A, 21B); les parties de coque de serrage (21A, 21B) comportant, de préférence dans la deuxième zone, respectivement au moins un support de contact d'extrémité pour une broche de contact (25) ou une douille de contact.

6. Câble selon la revendication 5, **caractérisé en ce que** les parties de coque de serrage (21A, 21B) comportent au moins un joint d'étanchéité à leur interface et ou une décharge de traction à l'extrémité côté câble de la première zone.

7. Câble selon l'une des revendications 1 à 6, **caractérisé en ce que** le dispositif de contact (20) comporte exactement deux parties de coque de serrage (21A, 21B) qui sont fabriquées sous forme de demi-coques, notamment sous forme de pièces identiques.

8. Câble selon l'une des revendications 1 à 7, **caractérisé en ce qu'**au moins un nombre de logements (22-1, 22-2, 22-3) correspondant au nombre de conducteurs concentriques est prévu dans chaque partie de coque de serrage (21A, 21B) et au moins certains logements de chaque partie de coque de serrage reçoivent respectivement la forme de gouttière (24) d'un corps de contact et la partie périphérique du conducteur associé qui est bordée par celle-ci.

9. Câble selon l'une quelconque des revendications 1 à 8, **caractérisé en ce que**
- l'âme de câble (11) comprend un autre conducteur constitué de fils individuels;
- une couche de support est prévue pour chaque isolation (14) entre une paire de conducteurs concentriques adjacents, couche de support qui empêche l'enfoncement des fils individuels dans l'isolation;
et/ou
- la section transversale des fils individuels diminue d'un conducteur concentrique (11; 12) au conducteur concentrique suivant (12; 13) vers l'extérieur.

10. Câble selon l'une des revendications 1 à 9, **caractérisé en ce que** chaque conducteur (11, 12, 13) est constitué de fils individuels torsadés, de préférence torsadés dans le sens opposé alterné d'un conducteur au suivant, et notamment torsadés sur l'isolant intermédiaire.

11. Câble selon l'une des revendications 1 à 10, **caractérisé en ce qu'**au moins trois conducteurs concentriques (11, 12, 13) sont disposés autour de l'âme du câble, deux conducteurs ayant chacun une section annulaire totale d'au moins 20 mm², notamment supérieure à 60 mm², servant de conducteurs d'alimentation électrique.

12. Câble selon l'une des revendications 1 à 11, **caractérisé en ce qu'**il est prévu au moins un conducteur de signaux pour la transmission de données avec une section transversale totale nettement inférieure à celle des conducteurs d'alimentation électrique.

13. Station de charge pour véhicules électriques comprenant un câble selon l'une des revendications 1 à 12.

14. Utilisation d'un câble (10) selon l'une des revendications 1 à 12 comme câble de charge pour véhicules électriques.
